# EUROPÄISCHE PATENTSCHRIFT

(11) **EP 0 728 553 B1**
(45) Veröffentlichungstag und Bekanntmachung des Hinweises auf die Patenterteilung: **04.11.1998**
(21) Anmeldenummer: 96101210.1
(22) Anmeldetag: 29.01.1996
(51) Int. Cl.: B23H 7/06

(54) **Elektroerosionsvorrichtung**
Electric discharge machine
Machine d'usinage par électroérosion

(30) Priorität: 27.02.1995 DE 19506775
(43) Veröffentlichungstag der Anmeldung: 28.08.1996
(73) Patentinhaber: AGIE SA, 6616 Losone (CH)
(72) Erfinder: Lodetti, Attilio, Ing. HTL, CH-6615 Losone (CH); Etter, Hansjürg, CH-6644 Orselina (CH); Tobler, Karl, Ing. HTL, CH-6673 Maggia (CH)
(74) Vertreter: Turi, Michael, Dipl.-Phys.

(56) Entgegenhaltungen:
- EP-A- 0 198 230
- WO-A-82/01496
- DE-A- 3 201 544
- DE-C- 3 041 612

## Beschreibung

Die Erfindung bezieht sich auf eine Elektroerosionsvorrichtung, insbesondere Schneiderosionsvorrichtung, mit wenigstens einem an einem Führungsarm angeordneten schwenkbaren Elektrodenführungskopf für eine Bearbeitungselektrode und mit je einem mit einem Stellmotor ausgestatteten Schwenkantrieb pro Schwenkachse.

Bei einer Schneiderosionsvorrichtung wird, ausgehend von einer Startbohrung, eine Kontur mittels einer Drahtelektrode in ein Werkstück geschnitten, das in einer Bearbeitungszone der Schneiderosionsvorrichtung eingespannt ist. Damit die Drahtelektrode relativ zum erodierenden Werkstück eine eindeutige und geometrisch beherrschbare Bearbeitungslage erhält, wird sie zwischen zwei Drahtführungsköpfen präzise durch das Werkstück geführt und unter axialen Zug gesetzt. Die zum Schneiden notwendige, die Schnittkonturen bestimmende Relativbewegung zwischen Werkstück und Erodierdraht besorgt ein mit dem Werkstück gekoppelter X/Y-Antrieb. Zum Schneiden konischer Schnitte ist zusätzlich ein mit einem der Drahtführungsköpfe gekoppelter U/V-Antrieb vorgesehen, bisweilen auch noch einen Z-Antrieb zu deren Bewegung in Z-Richtung.

Die DE-C-3 041 612 offenbart eine Schneiderosionsvorrichtung nach der eingangs genannten Art. Dabei sind Drahtführungskopfe über in unmittelbarer Nähe dieser Drahtführungsköpfe angeordnete Schwenkantriebe um jeweils zwei Schwenkachsen unabhängig voneinander schwenkbar gelagert. Nachteilig bei dieser Anordnung ist, daß zumindest die Schwenkantriebe des unteren Drahtführungskopfes während der Bearbeitung in einer dielektrischen Spülflüssigkeit eingetaucht sind. Dies beschleunigt den chemischen Zerfall der Schwenkantriebe, z.B. durch Korrosion, aber auch deren mechanischen Verschleiß, z.B. durch während der Erosionsbearbeitung anfallenden, in die Schwenkantriebe eindringende Werkstückpartikel.

Ferner offenbart die DE-C-3 041 612 eine weitere Variante, bei welcher der obere und untere Drahtführungskopf über ein gemeinsames Gestänge mit dem außerhalb der Bearbeitungszone angeordneten U/V-Antrieb der Drahtschneidemaschine verbunden sind. Auf diese Weise sind die beiden schwenkbaren Drahtführungsköpfe zwangsgekoppelt, d.h. nicht unabhängig voneinander beliebig verschwenkbar. Mit dieser kinematischen Zwangskopplung ist jedoch eine beträchtliche Einschränkung des Arbeitsbereiches der Funkenerosionsmaschine verbunden, so daß sie für größere Werkstücke ungeeignet ist. Im übrigen ist die Kopplung des Gestänges mit dem U/V-Antrieb der Maschine für eine exakte koaxiale Ausrichtung der Drahtführungsköpfe nicht ideal.

Die DE-A-3 201 544 behandelt ebenfalls eine Elektrodenführung mit koaxial im Abstand zu einander angeordneten zwangsgekoppelt schwenkbaren Drahtführungsköpfen. Die Zwangskopplung wird durch ein mit dem U/V-Antrieb gekoppeltes Parallelogrammgestänge erreicht. Ferner beschreibt die EP-A-O 198 230 eine Elektroerosionsmaschine mit einem hydraulischen Antriebssystem, wobei die Elektrodenführungsköpfe hydraulisch zwangsgekoppelt, also ebenfalls nicht unabhängig voneinander bewegbar sind.

Die Erfindung möchte eine Elektroerosionsvorrichtung der eingangs genannten Art dahingehend verbessern, daß ein beliebiges Verschwenken jedes Elektrodenführungskopfes ohne Einschränkung des Arbeitsbereiches der Funkenerosionsmaschine möglich ist.

Dies erreicht die Erfindung durch den Gegenstand des Anspruchs 1. Vorteilhafte Weiterbildungen sind den Unteransprüchen zu entnehmen.

Danach sind bei einer Elektroerosionsvorrichtung der eingangs genannten Art die Stellmotoren der Schwenkantriebe, insbesondere für den unteren Drahtführungskopf, außerhalb der Bearbeitungszone angeordnet und mit dem zugehörigen Elektrodenführungskopf antriebsmäßig verbunden. Hierfür ist jedem Elektrodenführungskopf für jede Schwenkachse je ein elektrischer Stellmotor zugeordnet, der im oder am Maschinengestell oder in dem/den Führungsarm/en der Elektroerosionsvorrichtung angeordnet und durch den/die Führungsarm/e hindurch mit dem zugehörigen Elektrodenführungskopf verbunden ist.

Damit ist die Konstruktionsfreiheit der Elektroerosionsvorrichtung insgesamt erhöht. Somit kann der gesamte, zwischen den Elektrodenführungsköpfen befindliche, Arbeitsbereich vor allem für die Bearbeitung größerer Werkstücke genutzt werden.

Die Schwenkantriebe sind außerdem weniger störanfällig, weil die Stellmotoren mit der dielektrischen Spülflüssigkeit nicht in Kontakt kommen. Aufgrund der Integration der Stellmotoren im Maschinengestell oder in dem/den Führungsarm/en sind auch etwaige mechanische Kollisionen zwischen dem Werkstück - beim Verfahren des X/Y-Antriebes - und den Stellmotoren der Schwenkantriebe ausgeschlossen. Auch thermische Einflüsse auf die Genauigkeit der Schwenkantriebe, z.B. durch die Erwärmung der dielektrischen Spülflüssigkeit, sind auf ein Minimum reduziert.

Bei einer Schneiderosionsmaschine mit zwei Drahtführungsköpfen, d.h. einem oberen, in Drahtvorschubrichtung vor dem Werkstück angeordneten Drahtführungskopf und einem unteren, in Drahtvorschubrichtung nach dem Werkstück angeordneten Drahtführungskopf, sind diese um jeweils zwei Schwenkachsen völlig unabhängig voneinander schwenkbar. Dies begünstigt die Montage der Komponenten der Schwenkantriebe, sowie den Austausch einzelner Komponenten, und vereinfacht die Steuerung der koaxialen Ausrichtung der Drahtführungsköpfe. Das erfindungsgemäße System zeichnet sich ingesamt durch seine hohe mechanische Steifigkeit und damit hohe Genauigkeit der ausgerichteten Drahtführungsköpfe aus, selbst bei Schwenkwinkeln über 45°. Gerade bei solchen großen Schwenkwinkeln haben die eingangs beschriebenen bekannten Schwenksysteme aufgrund der durch die Drahtelektrode auf die Drahtführungsköpfe ausgeübten Zugkraft als ungenau erwiesen .

Grundsätzlich können die den Elektrodenführungen zugeordneten Stellmotoren an beliebiger Stelle außerhalb der Bearbeitungszone der Elektroerosionsvorrichtung angebracht sein, da die antriebsmäßige Verbindung mit der Schwenkachse der Elektrodenführungsköpfe beliebig lang sein kann.

Bei einer bevorzugten Variante stehen die Stellmotoren mit den vorzugsweise kardanischen Schwenkachsen des Elektronenführungskopfes über ein - eine translatorische Bewegung erzeugendes - Lineargetriebe, z.B. Zahnstangen- oder Schraubgetriebe, in Verbindung. Bevorzugt ist das Lineargetriebe zusätzlich mit einem Schneckengetriebe und/oder einem Zahnriemengetriebe zur Übertragung der Rotation der Stellmotoren in eine Schwenkung der Drahtführungsköpfe gekoppelt.

Ein solches Lineargetriebe weist vorzugsweise folgende Elemente auf: eine von der Motorwelle des Stellmotors angetriebene - drehbar gelagerte - Drehwelle; eine mit der Drehwelle getriebemäßig gekoppelte - verschiebbar gelagerte - Gleit- bzw. Verschiebungswelle, derart, daß die Drehbewegung der Drehwelle in eine Linearbewegung der Gleitwelle umgewandelt wird, wobei die Gleitwelle gelenkig, insbesondere über einen Gelenkhebel, mit dem Elektrodenführungskopf verbunden ist. Eine solche Kopplung zwischen einem Stellmotor und dem zugehörigen Elektrodenführungskopf arbeitet schlupffrei mit großer Betriebssicherheit und Lebensdauer, erfordert geringe Wartung und zeichnet sich durch Überbelastbarkeit, kleine Baugröße und guten Wirkungsgrad aus.

Bei einer konstruktiv besonders einfachen Variante ist die Drehwelle mit einem Außengewinde, besser Außenschraubgewinde, ausgestattet, das mit einem Innengewinde, besser Innenschraubgewinde, der Gleitwelle in Wirkverbindung steht. Auf diese Weise wird der häufig, insbesondere bei Schneckengetriebe auftretende Umkehrfehler vermieden.

Für die automatische Einstellung der Schwenklage eines Elektrodenführungskopfes sind vorzugsweise Meßeinrichtungen zur Messung des Schwenkwinkels des Elektrodenführungskopfes vorgesehen, wobei die Ausgänge der Meßeinrichtungen Reglern zugeführt werden, welche die Stellmotoren der Schwenkantriebe ansteuern. Besonders günstig erweist sich die Überwachung der Motorwelle des Stellmotors mit Hilfe eines Drehzahlsensors oder eines Winkeldrehgebers, woraus bei Kenntnis des Untersetzungsverhältnisses zwischen der Motorwellenbewegung des Stellmotors und der Schwenkbewegung des Elektrodenführungskopfes der Schwenkwinkel exakt ermittelt werden kann.

Die Steuerung des Schwenkantriebes berücksichtigt die Tatsache, daß die translatorische Bewegung der Gleitwelle im Verhältnis zur Schwenkbewegung der Elektrodenführungsköpfe nicht proportional ist. Der Fachmann ist in der Lage, die Beziehung zwischen der Winkellage am Antriebsmotor und der Winkellage des Elektrodenführungskopfes herzuleiten.

Begünstigt wird die Genauigkeit der Einstellung der Schwenklage des Elektrodenführungskopfes auch durch eine mechanische oder elektronische Übersetzungsvorrichtung im Stellmotor des Schwenkantriebes.

Bei einer besonders bevorzugten Variante stehen die jeweiligen Schwenkantriebe pro Schwenkachse eines bestimmten Elektrodenführungskopfes in Wirkverbindung miteinander, wobei die Gleitwelle des einen Schwenkantriebes mit einer den Elektrodenführungskopf tragenden Drehwelle des anderen Schwenkantriebes gelenkig, gegebenenfalls über einen Gelenkhebel verbunden ist, derart, daß die Linearbewegung der Gleitwelle des einen Schwenkantriebes in eine Drehbewegung der Drehwelle des anderen Schwenkantriebes umgewandelt wird. Auf diese Weise wird eine Kopplung bzw. Kreuzung zweier Linearantriebe realisiert, wobei die og. Drehwelle die translatorische, durch einen der Schwenkantriebe erzeugte Bewegung der Gleitwelle als Drehbewegung auf den zugehörigen Elektrodenführungskopf überträgt.

Bei einer erfindungsgemäßen Elektroerosionsvorrichtung zum elektroerosiven Schneiden eines Werkstücks mit zwei schwenkbaren Drahtführungsköpfen sind die Drahtführungsköpfe über die elektronisch gesteuerten Stellmotoren derart schwenkbar und zusätzlich einer der Drahtführungsköpfe - entsprechend dem vertikalen Z-Abstand der Drahtführungsköpfe - über den U/V-Schlitten derart translatorisch verschiebbar, daß die Drahtführungsköpfe koaxial zueinander liegen, d.h. miteinander fluchten. Konstruktiv wird dies vorteilhaft dadurch realisiert, daß die Schwenkantriebe zusammen mit dem zugeordneten Drahtführungskopf mittels des U/V-Schlittens translatorisch verschiebbar sind.

Weitere Vorteile und Ausgestaltungen der Erfindung ergeben sich aus der nachfolgenden Beschreibung bevorzugter Ausführungsbeispiele. In der Beschreibung wird auf die beigefügte schematische Zeichnung Bezug genommen. In der Zeichnung zeigen:
- Fig. 1: einen Teilschnitt durch eine erfindungsgemäße Schneiderosionsvorrichtung zur Veranschaulichung der Anordnung der Schwenkantriebe;
- Fig. 2: einen Schnitt durch einen erfindungsgemäßen Schwenkantrieb; und
- Fig. 3 a, b: einen Querschnitt (Fig. 3a) und einen Längsschnitt entlang der Linie I-I in Fig. 3a (Fig. 3b) eines Schwenkantriebs zur Verkippung eines Drahtführungskopfes um zwei Schwenkachsen.

Im nachfolgenden wird die Erfindung anhand einer Schneiderosionsvorrichtung beschrieben. Dies ist nicht einschränkend zu verstehen, da die vorliegende Erfindung auch für die Verkippung einer Senkelektrode in einer Elektrodenführung einer Senkerosionsvorrichtung verwendet werden kann.

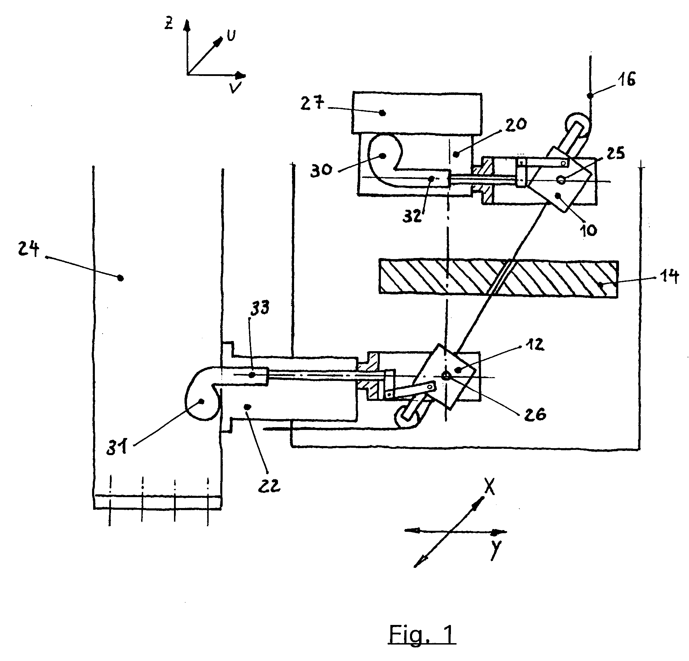

Fig. 1 beschränkt sich auf eine rein schematische Darstellung der wesentlichen - zum Verständnis der Erfindung erforderlichen - Komponenten einer Schneiderosionsvorrichtung. Es wird dabei eine Terminologie verwendet, die der leichteren Lesbarkeit der Beschreibung dient, jedoch nicht einschränkend zu verstehen ist. Beispielsweise beziehen sich die Ausdrücke "oben" bzw. "unten" auf Schneiderosionsvorrichtungen üblicher Arbeitsaufstellung und Größe sowie auf in üblicher Weise angeordnete Werkstücke.

Fig. 1 zeigt schematisch und ausschnittsweise die Bearbeitungszone einer funkenerosiven Schneidvorrichtung. Diese besitzt zwei im Abstand voneinander angeordnete Drahtführungsköpfe, deren oberer mit 10 und deren unterer mit 12 bezeichnet ist. Zwischen den einander gegenüberliegenden Drahtführungsköpfen 10, 12 befindet sich die Bearbeitungszone der Schneidvorrichtung, in welcher ein zu bearbeitendes Werkstück 14 auf einen - hier nicht dargestellten - Bearbeitungstisch aufgespannt ist. Eine Drahtelektrode 16 wird durch die Drahtführungsköpfe 10, 12 gegenüber dem Werkstück 14 in der beabsichtigten Lage geführt. Für ein einwandfreies Erosionsergebnis ist es wünschenswert, daß die Drahtführungsköpfe 10, 12 koaxial zueinander ausgerichtet sind, so daß deren Achsen und die Drahtelektrode 16 auf einer gemeinsamen Linie liegen; und zwar auch dann, wenn bei schräger Ausrichtung der Drahtführungsköpfe 10, 12, wie es beispielsweise zum Schneiden eines Konus erforderlich ist, die Drahtführungsköpfe 10, 12 gegenüber der Z-Achse gekippt sind.

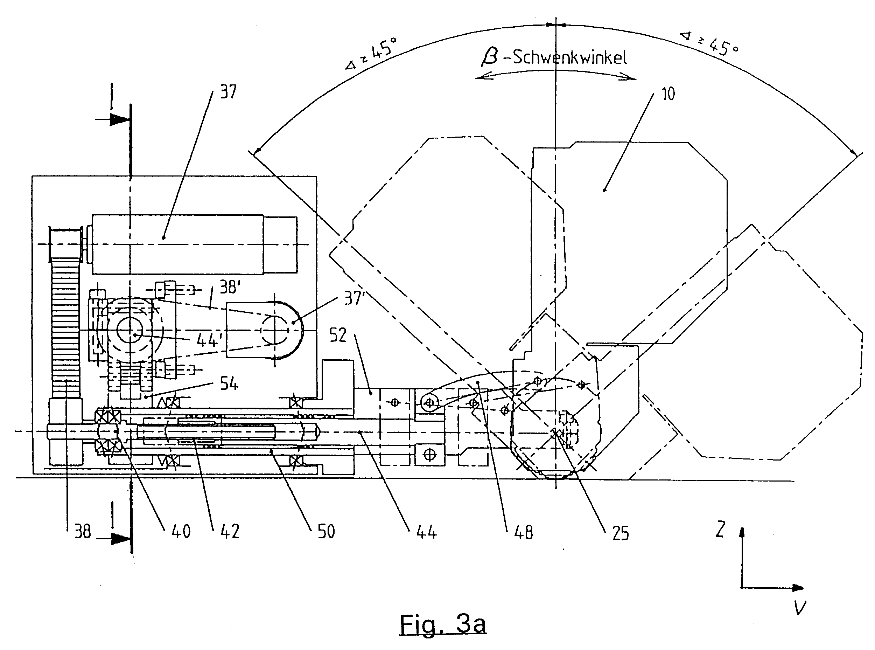

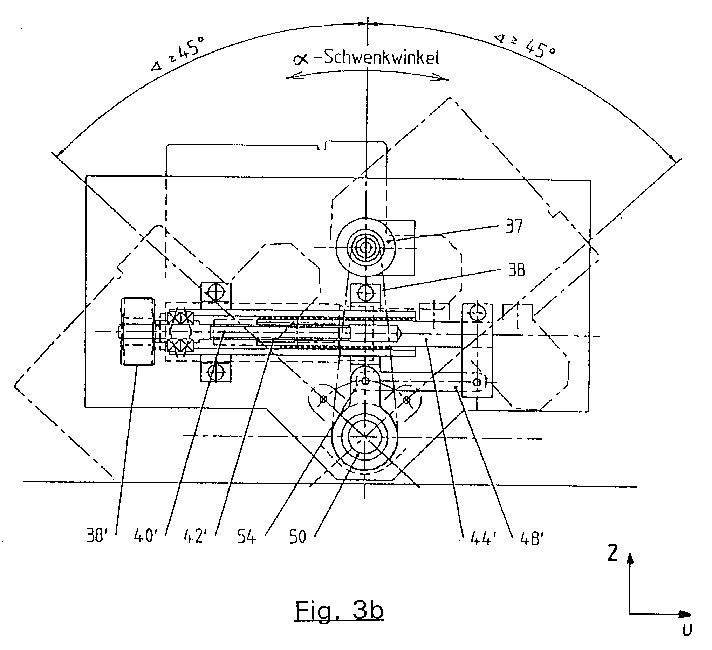

Beide Drahtführungsköpfe 10, 12 befinden sich jeweils an den vorderen Enden von Tragarmen 20, 22, welche an einem Maschinengestell 24, hier einem C-Maschinengestell, befestigt sind. Die Drahtführungsköpfe 10, 12 können jeweils um die U- und V-Achse gekippt bzw. geschwenkt werden. Die Schwenklager 25, 26 bilden die Drehachsen der Rotation um die U-Achse. Quer dazu verlaufende Drehwellen (in Fig. 3 mit 50 gekennzeichnet) bilden die Drehachsen der Rotation um die V-Achse. Ein Schwenken der Drahtführungsköpfe 10, 12 um die V-Achse bewirkt eine Drehung um einen Schwenkwinkel α in der durch die Z- und U-Achsen aufgespannten Ebene. Ein Schwenken um die U-Achse bewirkt dagegen ein Verdrehen der Drahtführungsköpfe um einen Schwenkwinkel β in der durch die Z- und V-Achsen aufgespannten Ebene.

Um die in Fig. 1 dargestellte Ausrichtung der beiden Drahtführungsköpfe zu erhalten, ist der obere Drahtführungskopf 10 durch einen U/V-Schlitten 27 entlang der U- bzw. V-Achsen translatorisch verschiebbar und zusätzlich um die Schwenkwinkel α und β, welche die Schwenklage der Drahtführungsköpfe 10, 12 bestimmen, verschwenkbar.

Die Drahtführungsköpfe 10, 12 sind unabhängig voneinander jeweils um die Winkel α und β schwenkbar. Hierfür ist für jeden Drahtführungskopf 10, 12 ein eigener Schwenkantrieb pro Schwenkwinkel bzw. Schwenkachse vorgesehen. Zum Verschwenken der beiden Drahtführungsköpfe 10, 12 je um den Winkel β sind Stellmotoren 30, 31, z.B. Schrittmotoren, vorgesehen, die mit ihrer Motorwelle jeweils mit einem, Lineargetriebe 32, 33 zusammenwirken. Diese Lineargetriebe 32, 33 erzeugen eine translatorische Bewegung und sind mit ihrem dem jeweiligen Stellmotor 30, 31 gegenüberliegenden Ende gelenkig an dem zugehörigen Drahtführungskopf 10 bzw. 12 befestigt. Dabei ist der Anlenkpunkt der Getriebewellen 32, 33 an dem zugeordneten Drahtführungskopf 10, 12 gegenüber dem durch die Schwenklager 25, 26 definierten Schwenkpunkt um einen definierten Abstand versetzt angeordnet, und zwar ausgehend von den Schwenklagern 25, 26 in einer vom Werkstück 14 abweisenden Richtung.

Im vorliegenden Fall sind die Stellmotoren 31 der Schwenkantriebe des unteren Drahtführungskopfes 12 weit außerhalb der Bearbeitungszone angeordnet, nämlich innerhalb des Maschinengestell 24 an dem dem Drahtführungskopf 12 gegenüberliegenden Ende des Tragarms 22, der am Maschinengestell 24 in horizontaler Lage befestigt ist. Die Getriebestange 33 verläuft durch den entsprechenden Tragarm 22 hindurch von dem Stellmotor 31 zu dem zugehörigen Drahtführungskopf 12. Damit sind die Schwenkantriebe vom Drahtführungskopf 12 entfernt jedoch in dem Maschinengestell 24 integriert angeordnet. Der Bereich zwischen den Drahtführungsköpfen 10, 12 ist durch diese Art der Anordnung uneingeschränkt für die Bearbeitung des Werkstückes 14 zugänglich.

Beiden Stellmotoren 30, 31 ist jeweils eine - hier nicht dargestellte - Steuereinrichtung zugeordnet, welche über extern eingegebene (beispielsweise über eine Tastatur oder eine numerische Maschinensteuerung) Werte für den Winkel β sowie die Schneidhöhe H die erforderlichen Werte für die Änderung des Schwenkwinkels errechnen und in Abhängigkeit von den ermittelten Werten die Stellmotoren 30, 31 antreiben. Zusätzlich kann noch ein geschlossener Regelkreis vorgesehen sein. Über einen Meßfühler, z.B. einen der Motorwelle der Stellmotoren 30, 31 zugeordneten Drehzahlsensor, wird - bei Kenntnis des Untersetzungsverhältnisses zwischen der Motorwellenbewegung und der Schwenkbewegung des zugehörigen Drahtführungskopfes 10 bzw. 12 - der Schwenkwinkel β gemessen und über eine elektrische Steuerleitung einem Regler zugeführt werden. Der Regler erzeugt aus dem gemessenen Signal und dem Sollwertsignal ein Stellsignal für den Stellmotor 30 bzw. 31.

Die Verschwenkung der beiden Drahtführungsköpfe 10, 12 um den Schwenkwinkel α erfolgt in analoger Weise über eigene, den Drahtführungsköpfen 10, 12 zugeordnete Schwenkantriebe, welche den beschriebenen Schwenkantrieben 30, 32 und 31, 33 entsprechen. Die Schwenkantriebe je Schwenkwinkel α und β für jeden der Drahtführungsköpfe 10, 12 können völlig unabhängig voneinander auf die Schwenklage des zugeordneten Drahtführungskopfes 10, 12 einwirken. Es besteht aber auch die Möglichkeit, daß die Schwenkantriebe miteinander mechanisch gekoppelt sind, derart, daß die Getriebestange eines der beiden Schwenkantriebe sowohl eine Verkippung um den Winkel α als auch eine Verkippung um den Winkel β überträgt.

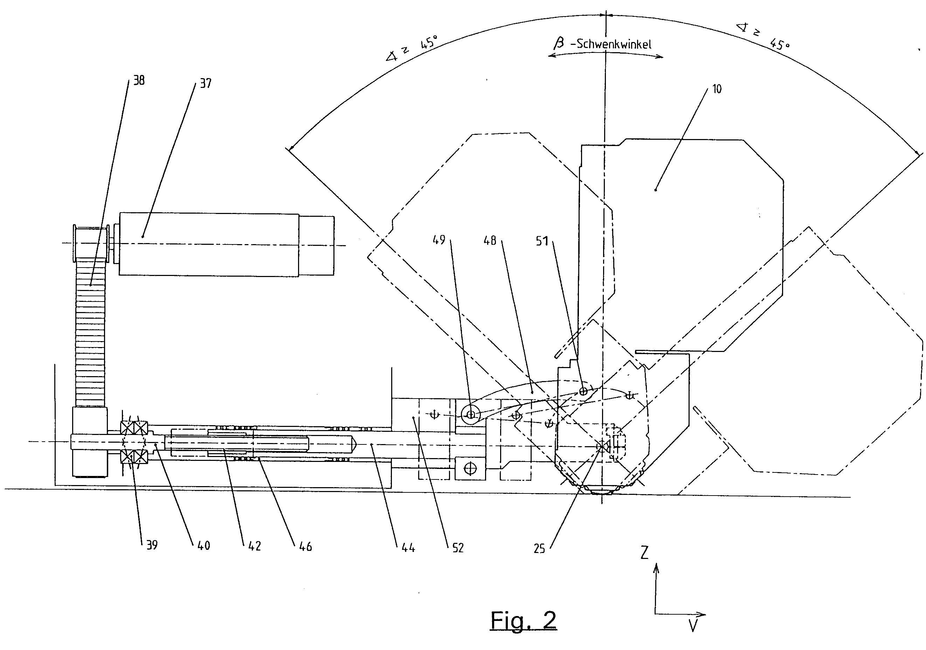

Fig. 2 zeigt einen Schwenkantrieb zum Verschwenken des oberen Drahtführungskopfes 10, der in Fig. 1 beschriebenen Schneiderosionsvorrichtung, und zwar um einen Schwenkwinkel β in der durch die Z- und V-Achsen aufgespannten Ebene. Der Drahtführungskopf 10 wird im Tragbalken 52 durch die Schwenklager 25 gelagert.

Ein Stellmotor 37 ist über einen Riemen 38, z.B. Zahn- oder Flachriemen, mit einer in Kugellagern 39 drehbar gelagerten Drehwelle 40 gekoppelt, so daß sich die Drehung seiner Motorwelle auf die Drehwelle 40 überträgt. Vorzugsweise ist der Stellmotor 37 mit einer inneren elektronischen oder mechanischen Untersetzung zwischen der Motorwelle und dem Riemenritzel ausgestattet, um den Antrieb der Drehwellenbewegung noch genauer steuern zu können. Die Drehwelle 40 ist zylinderförmig ausgebildet und an ihrem äußeren Umfang mit einem Schraubengewinde 42 versehen. Das Außengewinde 42 steht mit einem entsprechenden Innengewinde an der inneren Oberfläche einer hohlzylinderförmigen Gleit- bzw. Verschiebungswelle 44 in Eingriff. Diese ist zwischen Gleitringen 46 translatorisch verschiebbar gelagert, so daß die Drehbewegung der Drehwelle 40 in eine Linearbewegung der Gleitwelle 44 in V-Richtung umgewandelt wird. Ändert sich die Drehrichtung der Drehwelle 40, so führt dies gleichermaßen zu einer Umkehr der Linearbewegung der Gleitwelle 44 in umgekehrter V-Richtung. Die Gleitwelle 44 ist mit ihrem, dem Drahtführungskopf 10 zugewandten Ende über einen Gelenkhebel 48 mit dem Drahtführungskopf 10 gelenkig verbunden. Dabei ist ein erster Anlenkpunkt 49 des Gelenkhebels 48 an der Gleitwelle 44 aus dem Achszentrum der Welle verschoben und ein zweiter Anlenkpunkt 51 des Gelenkhebels 48 an dem oberen Drahtführungskopf 10 gegenüber dem durch das Schwenklager des Drahtführungskopfes definierten Schwenkpunkt versetzt. Im Ergebnis wird die Drehbewegung der Motorwelle des Stellmotors 37 auf die Drehwelle 40 übertragen, über das zuvor beschriebene Schraubgetriebe in eine translatorische Bewegung der Gleitwelle 44 umgewandelt, und schließlich über einen als Gelenkhebel 48 ausgebildeten Umsetzer in eine Schwenkbewegung des Drahtführungskopfes 10 transformiert.

Der Schwenkantrieb für das Schwenken des unteren Drahtführungskopfes 12 um den Schwenkwinkel β ist im wesentlichen gleich aufgebaut. Je nach Anordnung des Schwenkantriebes im oder am Maschinengestell der Schneiderosionsvorrichtung können die Dreh- und/oder Gleitwelle 40, 44 in ihrem Längenverhältnis anders dimensioniert oder gegebenenfalls mit weiteren Verlängerungsgliedern erweitert sein. Das kinematische Prinzip bleibt jedoch dasselbe.

Die Figuren 3a und 3b zeigen zwei miteinander gekoppelte Schwenkantriebe der zuvor beschriebenen Art, welche die Verschwenkung eines oberen Drahtführungskopfes 10 einer Schneiderosionsvorrichtung um beide Schwenkwinkel α und β gewährleisten. Dieses Schwenksystem ist in Fig. 3a im Schnitt entlang der Z/V-Ebene dargestellt: Entsprechend dem Schwenkantrieb in Fig. 2 wird die Motorwellenbewegung eines Stellmotors 37 über einen Riemen 38 auf eine Drehwelle 40 übertragen, welche mit einer Gleitwelle 44 über ein Schraubgewinde 42 in Wirkverbindung steht, so daß die Drehbewegung der Drehwelle 40 in eine Linearbewegung der Gleitwelle 44 umgewandelt und über einen Gelenkhebel 48 als Schwenkbewegung auf den Drahtführungskopf 10 übertragen wird. Dies führt zu einem Verschwenken des Drahtführungskopfes 10 um den Schwenkwinkel β.

In Erweiterung des in Fig. 2 beschriebenen Schwenkantriebes ist im vorliegenden Fall außerdem eine weitere - die Drehwelle 40 und die Gleitwelle 44 umgebende - koaxiale Drehwelle 50 vorgesehen, welche drehbar gelagert und starr mit dem Tragbalken 52 verbunden ist. Eine Drehung der Drehwelle 50 bewirkt somit ebenfalls eine Drehung des Drahtführungskopfes 10 um die Achse der Drehwelle 50, also in der durch die Z- und U-Achsen aufgespannten Ebene um den Schwenkwinkel α. An dem dem Drahtführungskopf gegenüberliegenden Ende besitzt die Drehwelle 50 einen Flansch 54, an dem der zweite Schwenkantrieb des Schwenksystems zum Verschwenken um den Winkel α angekoppelt ist. Im übrigen ist auch der zweite Schwenkantrieb entsprechend dem in Fig. 2 gezeigten Schwenkantrieb aufgebaut.

Dies wird in Fig. 3b veranschaulicht, welche einen Schnitt entlang der Linie I-I der Fig. 3a zeigt: Auch hier steht ein in der vorliegenden Darstellung nur mit gestrichelten Linien angedeuteter, hinter dem Schwenkgetriebe liegender Stellmotor über einen Riemen 38' mit einer Drehwelle 40' des Schwenkgetriebes in Verbindung. Die Drehwelle 40' überträgt die Drehbewegung über ein Schraubengewinde 42' auf eine Linearbewegung einer Gleitwelle 44', an deren - der Drehwelle 40 abgewandten - Ende ein Gelenkhebel 48' angelenkt ist. Dieser Gelenkhebel 48' ist mit seinem anderen Ende mit dem Flansch 54 der Drehwelle 50 ebenfalls gelenkig verbunden. Hierdurch wird die Linearbewegung der Gleitwelle 44' in eine Drehbewegung der Drehwelle 50 des ersten Schwenkantriebes umgesetzt und über dieselbe als Schwenkbewegung direkt auf den Drahtführungskopf 10 übertragen. Auf diese Weise wird die Einstellung der Verschwenkung des Drahtführungskopfes 10 um den Winkel α mit Hilfe des elektronisch gesteuerten Stellmotors 37' durchgeführt. Beide Schwenkantriebe - der erste für das Verschwenken um den Winkel β und der zweite für das Verschwenken um den Winkel α - verfügen jeweils über ein - eine translatorische Bewegung erzeugendes - Lineargetriebe, welche über die Schwenkwelle 50 kreuzweise miteinander gekoppelt sind. Mit Hilfe dieses gekoppelten Verschwenksystems sind Schwenklagen bis über 45° in der Z/V-Ebene (β-Schwenkwinkel), in der Z/U-Ebene (α-Schwenkwinkel) und Kombination davon (β und α-Schwenkwinkel gleichzeitig einstellbar.

Die mit unterbrochenen Linien gezeichneten Darstellungen des Drahtführungskopfes 10 in den Figuren 3a und 3b sind Beispiele, welche extreme Verschwenklagen des vorgeschlagenen Verschwenksystems in jeweils eine der Z/V- bzw. Z/U-Ebene veranschaulichen.

## Patentansprüche

1. Elektroerosionsvorrichtung, insbesondere Schneiderosionsvorrichtung, mit wenigstens einem schwenkbaren Elektrodenführungskopf (10, 12) für eine Bearbeitungselektrode (16) und mit je einem - mit einem Stellmotor (30, 31, 37, 37') ausgestatteten - Schwenkantrieb pro Schwenkachse, dadurch gekennzeichnet, daß jedem Elektrodenführungskopf (10, 12) für jede Schwenkachse (U, V) je ein elektrischer Stellmotor zugeordnet ist, der im oder am Maschinengestell (24) oder in dem/den Führungsarm/en (20, 22) angeordnet und durch den/die Führungsarm/e (20, 22) hindurch mit dem zugehörigen Elektrodenführungskopf (10, 12) antriebsmäßig verbunden ist.

2. Elektroerosionsvorrichtung nach Anspruch 1, dadurch gekennzeichnet, daß die antriebsmäßige Verbindung durch ein Lineargetriebe, z.B. Zahnstangen- oder Linearschraubengetriebe, ausgebildet ist.

3. Elektroerosionsvorrichtung nach Anspruch 2, dadurch gekennzeichnet, daß das Lineargetriebe mit einem Schneckengetriebe und/oder einem Zahnriemengetriebe gekoppelt ist.

4. Elektroerosionsvorrichtung nach Anspruch 2 oder 3, dadurch gekennzeichnet, daß das Lineargetriebe aufweist:
a) eine von einer Motorwelle des Stellmotors (37, 37') angetriebene Drehwelle (40, 40');
b) eine mit der Drehwelle (40, 40') getriebemäßig gekoppelte Gleitwelle (44, 44'), derart, daß die Drehbewegung der Drehwelle (40, 40') in eine Linearbewegung der Gleitwelle umgewandelt wird,
c) wobei die Gleitwelle (44, 44') gelenkig, insbesondere über einen Gelenkhebel (48, 48'), mit dem Elektrodenführungskopf (10, 12) verbunden ist.

5. Elektroerosionsvorrichtung nach Anspruch 4, dadurch gekennzeichnet, daß die Drehwelle (40, 40') mit einem Außengewinde (42, 42') ausgestattet ist, das mit einem Innengewinde der Gleitwelle (44, 44') in Wirkverbindung steht.

6. Elektroerosionsvorrichtung nach Anspruch 4 oder 5, gekennzeichnet durch Meßeinrichtungen, insbesondere der Motorwelle der Stellmotoren zugeordnete Drehzahlsensoren oder Winkeldrehgeber, zur Bestimmung des Schwenkwinkels (α,β), wobei die Ausgänge der Meßeinrichtungen Reglern zugeführt werden, welche die Stellmotoren ansteuern.

7. Elektroerosionsvorrichtung nach Anspruch 6, gekennzeichnet eine Regelung zur Korrektur der nicht proportionalen Bewegung der Motorwelle und der Schwenkbewegung des zugehörigen Drahtführungskopfes aufgrund der Messung des Drehzahlsensors.

8. Elektroerosionsvorrichtung nach einem der Ansprüche 4 bis 7, dadurch gekennzeichnet, daß die Stellmotoren eine mechanische oder elektronische Einrichtung zur Untersetzung der Motorwellenbewegung aufweisen.

9. Elektroerosionsvorrichtung nach einem der Ansprüche 4 bis 8, dadurch gekennzeichnet, daß die einem Drahtführungskopf (10, 12) zugehörigen Schwenkantriebe je Schwenkachse in Wirkverbindung stehen, wobei die Gleitwelle (44') des einen Schwenkantriebes mit einer - den Drahführungskopf (10, 12) tragenden - Drehwelle (50) des anderen Schwenkantriebes gelenkig verbunden ist, derart, daß die Linearbewegung der Gleitwelle (44') in eine Drehbewegung der Drehwelle (50) umgewandelt wird.

10. Elektroerosionsvorrichtung nach einem der vorstehenden Ansprüche zum elektroerosiven Schneiden eines Werkstückes (14) mit zwei schwenkbaren Drahtführungsköpfen (10, 12), dadurch gekennzeichnet, daß die Drahtführungsköpfe über die Stellmotoren derart schwenkbar und zusätzlich einer der beiden Drahtführungsköpfe über einen U/V-Schlitten derart translatorisch verschiebbar sind, daß die Drahtführungsköpfe (10, 12) koaxial zueinander liegen.

11. Elektroerosionsvorrichtung nach Anspruch 10, dadurch gekennzeichnet, daß die Stellmotoren gemeinsam mit dem zugeordneten Drahtführungskopf mittels des U/V-Schlittens translatorisch verschiebbar sind.

## Claims

1. An electric discharge machine, in particular an erosive cutting machine, having at least one swivelling electrode guiding head (10, 12) for a machining electrode (16) and each having a pivot drive - equipped with a servomotor (30, 31, 37, 37') - for each swivel axis,
**characterised in that** associated with each electrode guiding head (10, 12) for each swivel axis (U, V) is an electric servomotor, which is disposed in or on the machine stand (24) or in the guiding arm(s) (20, 22) and through the drive arm(s) (20, 22) is connected for drive purposes to the associated electrode guiding head (10, 12).

2. An electrical discharge machine according to Claim 1,
**characterised in that** the drive connection is formed by a linear mechanism, e.g. a rack and pinion gear or linear helical gear.

3. An electrical discharge machine according to Claim 2,
**characterised in that** the linear mechanism is coupled with a worm gear pair and/or a synchronous belt drive.

4. An electrical discharge machine according to Claim 2 or 3,
**characterised in that** the linear mechanism comprises:
a) a rotary shaft (40, 40') driven by a motor shaft of the servomotor (37, 37');
b) a sliding shaft (44, 44') coupled for gearing purposes to the rotary shaft (40, 40') in such a manner that the rotational movement of the rotary shaft (40, 40') is converted into a linear movement of the sliding shaft,
c) with the sliding shaft (44, 44') being flexibly connected to the electrode guiding head (10, 12), in particular via an articulated lever (48, 48').

5. An electrical discharge machine according to Claim 4,
**characterised in that** the rotary shaft (40, 40') is equipped with an external thread (42, 42'), which is in effective communication with an internal thread of the sliding shaft (44, 44').

6. An electrical discharge machine according to Claim 4 or 5,
**characterised by** measurement instruments, in particular speed sensors or angular shaft encoders associated with the motor shaft of the servomotors, for determining the swivel angle (α, β), with the outputs of the measurement instruments being supplied to controllers which control the servomotors.

7. An electrical discharge machine according to Claim 6,
**characterised** a closed-loop control to correct the non-proportional movement of the motor shaft and the pivoting movement of the associated wire-guiding head on the basis of the measurement of the speed sensor.

8. An electrical discharge machine according to one of Claims 4 to 7,
**characterised in that** the servomotors comprise a mechanical or electronic mechanism to reduce the motor shaft movement.

9. An electrical discharge machine according to one of Claims 4 to 8,
**characterised in that** the pivot drives associated with a wire-guiding head (10, 12) are in effective communication for each swivel axis, with the sliding shaft (44') of the one pivot drive being flexibly connected to a rotary shaft (50) - bearing the wire-guiding head (10, 12) - of the other pivot drive in such a manner that the linear movement of the sliding shaft (44') is converted into a rotational movement of the rotary shaft (50).

10. An electrical discharge machine according to one of the preceding claims for the electrical discharge cutting of a workpiece (14) with two swivelling wire-guiding heads (10, 12),
**characterised in that** the wire-guiding heads can be swivelled via the servomotors and in addition one of the two wire-guiding heads can be displaced in translation via a U/V carriage in such a manner that the wire-guiding heads (10, 12) lie coaxially with respect to one another.

11. An electrical discharge machine according to Claim 10,
**characterised in that** the servomotors can be displaced in translation jointly with the associated wire-guiding head by means of the U/V carriage.

## Revendications

1. Dispositif d'électroérosion, en particulier dispositif de coupe par électroérosion, comprenant au moins une tête pivotante guide-fil (10, 12) destinée à une électrode d'usinage (16) et dont chacune comprend pour chaque axe de pivotement une commande de pivotement - équipée d'un servomoteur (30, 31, 37, 37') - caractérisé en ce qu'un servomoteur électrique, qui est associé à chaque tête guide-électrode (10, 12) pour chaque axe de pivotement (U, V), est disposé dans ou sur le bâti (24) de la machine ou dans le/les bras de guidage (20, 22) et il est relié pour l'entraîner à la tête guide-électrode correspondante (10, 12) par un assemblage passant par le/les bras de guidage (20, 22).

2. Dispositif d'électroérosion selon la revendication 1, caractérisé en ce que l'assemblage de commande est formé d'une transmission linéaire, par exemple une transmission linéaire à crémaillère ou à tige filetée.

3. Dispositif d'electroérosion selon la revendication 2, caractérisé en ce que la transmission linéaire est reliée à une transmission à vis sans fin et/ou à une transmission à courroie crantée.

4. Dispositif d'électroérosion selon la revendication 2 ou 3, caractérisé en ce que la transmission linéaire comprend :
a) un arbre rotatif (40, 40') entraîné par un arbre du servomoteur (37, 37') ;
b) un arbre coulissant (44, 44') relié par une transmission à l'arbre rotatif (40, 40') de manière que le mouvement de rotation de l'arbre rotatif (40, 40') soit converti en un mouvement linéaire de l'arbre coulissant,
c) l'arbre coulissant (44, 44') étant relié par articulation, en particulier par un levier articulé (48, 48'), à la tête guide-électrode (10, 12).

5. Dispositif d'électroérosion selon la revendication 4, caractérisé en ce que l'arbre rotatif (40, 40') comporte un filetage (42, 42') qui est en relation fonctionnelle avec un taraudage de l'arbre coulissant (44, 44').

6. Dispositif d'électroérosion selon la revendication 4 ou 5, caractérisé par des dispositifs de mesure, en particulier des détecteurs de vitesse de rotation ou des capteurs d'angle de rotation associés à l'arbre des servomoteurs, pour la détermination de l'angle de pivotement (α, β), les signaux de sortie des dispositifs de mesure étant envoyés à des régulateurs qui attaquent les servomoteurs.

7. Dispositif d'électroérosion selon la revendication 6, caractérisé par un réglage de correction du mouvement non proportionnel de l'arbre du servomoteur et du mouvement de pivotement de la tête guide-fil correspondante sur la base de la mesure du détecteur de vitesse de rotation.

8. Dispositif d'électroérosion selon l'une des revendications 4 à 7, caractérisé en ce que les servomoteurs comprennent un dispositif mécanique ou électronique de démultiplication du mouvement de l'arbre du servomoteur.

9. Dispositif d'électroérosion selon l'une des revendications 4 à 8, caractérisé en ce que les commandes de pivotement prévues pour chaque axe de pivotement et appartenant à une tête guide-fil (10, 12) sont en relation fonctionnelle, l'arbre coulissant (44') de l'une des commande de pivotement étant relié par articulation à un arbre rotatif (50) - qui supporte la tête guide-fil (10, 12) - de l'autre commande de pivotement de manière que le mouvement linéaire de l'arbre coulissant (44') soit converti en un mouvement de rotation de l'arbre rotatif (50).

10. Dispositif d'électroérosion selon l'une des revendications précédentes, pour la coupe d'une pièce (14) par électroérosion, comprenant deux têtes pivotantes guide-fil (10, 12), caractérisé en ce que les servomoteurs peuvent faire pivoter les têtes guide-fil et de plus l'une des deux têtes guide-fil étant déplaçable en translation par un chariot U/V de manière que les têtes guide-fil (10, 12) soient coaxiales.

11. Dispositif d'électroérosion selon la revendication 10, caractérisé en ce que les servomoteurs sont déplaçables en translation avec les têtes guide-fil correspondantes au moyen du chariot U/V.
